**Europäisches Patentamt**

**European Patent Office**

**Office européen des brevets**

(19)

(11) **EP 0 751 171 B1**

(12) **EUROPÄISCHE PATENTSCHRIFT**

(45) Veröffentlichungstag und Bekanntmachung des Hinweises auf die Patenterteilung:
**02.05.2001 Patentblatt 2001/18**

(51) Int Cl.[7]: **C08J 3/22**, C08L 23/02
// (C08L23/02, 33:08)

(21) Anmeldenummer: **96103320.6**

(22) Anmeldetag: **04.03.1996**

(54) **Dispergiermittel für Pigmentkonzentrate**

Dispersing agent for pigment concentrates

Agent dispersant pour concentrés de pigments

(84) Benannte Vertragsstaaten:
**AT BE CH DE DK ES FR GB IT LI NL SE**

(30) Priorität: **04.05.1995 DE 19516387**

(43) Veröffentlichungstag der Anmeldung:
**02.01.1997 Patentblatt 1997/01**

(73) Patentinhaber: **Degussa AG**
**40474 Düsseldorf (DE)**

(72) Erfinder:
• **Berke, Fritz**
**44652 Herne (DE)**
• **Schrenk, Volker, Dr.**
**45896 Gelsenkirchen (DE)**
• **Scheiba, Manfred**
**45138 Essen (DE)**
• **Schäfer, Werner**
**45129 Essen (DE)**
• **Hahn, Günter, Dr.**
**45475 Mülheim (DE)**

(56) Entgegenhaltungen:
EP-A- 0 553 655          DE-C- 4 236 337
US-A- 3 527 844

• **DATABASE WPI Section Ch, Week 9435 Derwent Publications Ltd., London, GB; Class A14, AN 94-283389 XP002022638 & JP-A-06 211 951 (SANYO CHEM IND LTD) , 2.August 1994**

**Beschreibung**

Gegenstand der Erfindung sind ein Dispergiermittel für Pigmentpräparationen zur Einfärbung von Polyolefinen sowie Pigmentpräparationen, die mittels dieses Dispergiermittels hergestellt werden.

Für das Einfärben von Polyolefinen geeignete Pigmentpräparationen sind bereits bekannt. So beschreibt die DE-AS 12 39 093 Trägermaterialien auf Basis einer Mischung aus einem amorphen Ethylen-Propylen-Blockmischpolymerisat mit einer Viskosität von 5 000 - 300 000 cp bei 150 °C und einem niedermolekularen, kristallinen Polypropylen. Die Verwendung von Polypropylenwachs mit einer Viskosität von 500 - 5 000 cp bei 170 °C und einem isotaktischen Anteil von 40 - 90 Gew.-% wird in der DE-OS 26 52 628 beschrieben. Aus der DE-PS 42 36 337 geht hervor, daß bestimmte Polyacrylsäureester als Dispergiermittel für Pigmente in organischen Medien geeignet sind.

Nach dem bisherigen Stand der Technik kann bei der Verwendung solcher Trägermaterialien bei der Einfärbung von Polyolefinen das Auftreten von Agglomeraten nicht vollständig verhindert werden. Dies ist insbesondere bei der Herstellung eingefärbter Polyolefin-Fasern nachteilig, da Pigmentagglomerate sowohl zur Verstopfung der Schmelzesiebe des Spinnextruders als auch zum Faserbruch führen können. Faserbrüche sind jedoch höchst unerwünscht, da sie zu einem Produktionsausfall führen, der mit erheblichen Stillstandszeiten und einem beträchtlichen Reinigungsaufwand verbunden ist.

Die Aufgabe bestand daher darin, ein geeignetes Dispergiermittel zu entwickeln, mit dessen Hilfe Pigmente sehr fein dispergiert werden können, so daß bei der Herstellung eingefärbter Polyolefinfasern ein durch Pigmentagglomeration bedingter Faserbruch sicher vermieden werden kann. Aber auch für übliche Spritzguß- und Extrusionsanwendungen ist eine derart feine Dispergierung der Pigmente zur Erhöhung der Farbstärke erwünscht.

Diese Aufgabe wurde durch ein Dispergiermittel gelöst, das im wesentlichen aus folgenden Komponenten besteht:

I) 0 bis 90 Gew.-% eines weitgehend amorphen Poly-α-Olefins;
II) 0 bis 90 Gew.-% Polyolefinwachs;
III) 0 bis 30 Gew.-% kristallines Polyolefin sowie
IV) 1 bis 50 Gew.-% eines weiter unten beschriebenen Polyacrylsäureesters.

Das weitgehend amorphe Poly-α-Olefin ist ein Polymeres bzw. ein Copolymeres von einem oder mehreren α-Olefinen mit 2 bis 6 Kohlenstoffatomen wie beispielsweise Ethen, Propen, Buten-1, Penten-1, Hexen-1 oder 4-Methylpenten-1. Es kann auf bekannte Weise durch Polymerisation an klassischen Ziegler-Natta-Katalysatoren bzw. deren Weiterentwicklungen gezielt hergestellt werden, z. B. entsprechend DE-PS 23 06 667 oder DE-PS 29 30 108. Vorzugsweise besitzt es folgende Zusammensetzung:

3 bis 75 Gew.-% α-Olefine mit 4 bis 6 Kohlenstoffatomen,
25 bis 95 Gew.-% Propen sowie
0 bis 20 Gew.-% Ethen.

Besonders geeignet sind die unter dem Handelsnamen VESTOPLAST® erhältlichen Propen/Buten-1/Ethen-Terpolymeren und Propen/Buten-1-Copolymeren, jedoch können auch beispielsweise Propen/Ethen- oder Buten-1/Ethen-Copolymere bzw. APP verwendet werden.

Im allgemeinen besitzt das amorphe Poly-α-Olefin eine Viskosität von 1 000 bis 100 000 mPa·s bei 190 °C.

Das weitgehend amorphe Poly-α-Olefin ist im erfindungsgemäßen Dispergiermittel vorzugsweise zu 5 bis 90 Gew.-%, besonders bevorzugt zu mehr als 20 Gew.-% und insbesondere zu mehr als 30 Gew.-% enthalten.

Polyolefinwachse sind bekannt und sind beispielsweise in Ullmanns Encyklopädie der technischen Chemie, 4. Auflage, Band 24, Verlag Chemie Weinheim 1983, S. 36 - 45 beschrieben. Hierbei sind insbesondere Polyethylenwachs und Polypropylenwachs zu nennen. Diese liegen entweder als Homopolymer oder auch als Copolymer mit anderen α-Olefinen vor. In der Regel besitzen sie ein Molekulargewichtsmittel $\overline{M}_W$ im Bereich von 700 bis 30 000, wobei ein $\overline{M}_W$ von 900 bis 9 000 bevorzugt ist. Vorzugsweise besitzen sie darüber hinaus eine Dichte von weniger als 0,94 g/cm³ bei 25 °C.

Kristalline Polyolefine sind ebenfalls bekannt (Ullmanns Encyklopädie der technischen Chemie, 4. Auflage, Band 19, Verlag Chemie Weinheim 1980, S. 167 - 226; Kirk-Othmer, Encyclopedia of chemical technology, 3rd edition, vol. 16, John Wiley & Sons New York 1981, pp. 385 - 478). Geeignet sind beispielsweise Polyethylen niedriger, mittlerer oder hoher Dichte, Homopolypropylen, Propylen-Ethylen- oder Propylen-Butylen-Randomcopolymere, Random-Terpolymere von Ethylen, Propylen und Buten-1, Ethylen-Propylen-Blockcopolymere oder Polybuten-1. In einer bevorzugten Ausführungsform wird ein isotaktisches Polypropylen verwendet. Ein besonders geeigneter Typ hiervon besitzt einen MFR-Wert 230/2.16 nach ISO 1133 von 10 - 40 g/10 min.

Die erfindungsgemäß verwendeten Polyacrylsäureester besitzen üblicherweise ein Molekulargewichtsmittel

$\overline{M}_W$ von 1 000 bis 20 000. Sie sind erhältlich durch Umesterung von durch radikalische Polymerisation erhaltenen Polyacrylsäurealkylestern, deren Alkylrest 1 bis 3 Kohlenstoffatome aufweist, mit

a) gesättigten aliphatischen Alkoholen mit 4 bis 30 Kohlenstoffatomen und/oder

b) ungesättigten aliphatischen Alkoholen mit 8 bis 30 Kohlenstoffatomen und gegebenenfalls zusätzlich

c) Polyoxyalkylenmonoolen der allgemeinen Formel

$$R^1O\text{-}(C_nH_{2n}O\text{-})_xH,$$

wobei $R^1$ der Kohlenwasserstoffrest eines Startalkohols $R^1OH$ mit maximal 30 Kohlenstoffatomen ist und vorzugsweise einen Methyl-, Ethyl-, Propyl-, Butyl-, Octyl-, iso-Octyl-, 2-Ethylhexyl-, Allyl- oder Aralkylrest oder den Rest eines Fettalkohols bedeutet oder ein Alkylsulfonatrest ist,

n 2, 3 oder 4 ist und in der durchschnittlichen Polyoxyalkylengruppe einen mittleren Wert von 2 bis 3 hat und

x ein Wert von 1 bis 70 ist und in dem durchschnittlichen Polyoxyalkylenmonool einen mittleren Wert von 4 bis 50, insbesondere 6 bis 20 hat,

d) und gegebenenfalls Dialkylaminoalkanolen der allgemeinen Formel $HO\text{-}R^2\text{-}NR^3R^4$, wobei $R^2$ ein zweiwertiger Alkylenrest mit 2 bis 4 Kohlenstoffatomen ist und $R^3$ und $R^4$ gleich oder verschieden sind und Alkylreste mit 1 bis 4 Kohlenstoffatomen bedeuten,

wobei das molare Verhältnis der Alkoholkomponenten a) + b) + c) zu den Dialkylaminoalkoholen d) 1 : 0 bis 1 : 0,5 beträgt, und die Komponenten a) bis d) in solchen Mengen verwendet werden, daß 25 bis 70 % der Estergruppen umgeestert werden.

Derartige Umesterungsprodukte sind beispielsweise beschrieben in der DE-PS 38 42 201 und DE-PS 38 42 202 sowie in DE-A-39 06 702, 40 06 093, 41 23 478, 42 02 187 und 42 24 412. Diese Umesterungsprodukte haben gegenüber den analogen Copolymerisaten wesentliche Vorteile, wie z. B. eine wesentlich einheitlichere Molekulargewichtsverteilung. Sie sind weitgehend frei von monomeren Anteilen. Durch das Umesterungsverfahren gelingt überhaupt erst die Herstellung von Polyacrylaten, deren alkoholische Esterkomponente olefinische Doppelbindungen aufweist, ohne Bildung von höhermolekularen Nebenprodukten. So ist es ohne weiteres möglich, Polyacrylsäureester mit Oleylalkohol und gleichzeitig mit weiteren Hydroxylgruppen aufweisenden Verbindungen umzuestern.

Bei den erfindungsgemäß zu verwendenden Polyacrylsäureestern werden als Umesterungskomponenten a) bzw. b) gesättigte und/oder ungesättigte Alkohole mit 4 bis 30 bzw. 8 bis 30 Kohlenstoffatomen verwendet. In Frage kommen insbesondere die von den natürlich vorkommenden Fettsäuren durch Hydrierung abgeleiteten gesättigten Fettalkohole, wie Laurylalkohol, Myristylalkohol, Palmitylalkohol, Stearylalkohol oder Behenylalkohol. Von besonderem Interesse sind jedoch die ungesättigten Alkohole, insbesondere Oleylalkohol, bei dessen Verwendung als Umesterungskomponente besonders wirksame Dispergiermittel erhalten werden.

Als kurzkettige Alkohole kommen insbesondere Neopentylalkohol, Hexylalkohol, Octylalkohol und 2-Ethylhexylalkohol in Frage.

Die Umesterungskomponente c) wird durch Polyoxyalkylenmonoole der allgemeinen Formel

$$R^1O\text{-}(C_nH_{2n}O\text{-})_xH$$

gebildet.

$R^1$ ist dabei der Kohlenwasserstoffrest eines Startalkohols $R^1OH$ oder einer Sulfonsäure. Der Startalkohol ist vorzugsweise ein niederer Alkohol. Der Rest $R^1$ ist somit bevorzugt ein Methyl-, Ethyl-, Propyl-, Butyl-, iso-Octyl- oder Allylrest. Es können jedoch auch langkettige Reste, z. B. der Stearyl-/Behenylrest, ausgewählt werden.

Der Index n kann einen Wert von 2, 3 oder 4 haben, so daß es sich bei der Einheit in der Klammer um eine Oxyethylen-, Oxypropylen-, Oxybutylen-oder Oxytetramethyleneinheit handelt. Da die Polyoxyalkylenmonoole Copolymere sein können bzw. in Form eines Gemisches vorliegen können, kann der durchschnittliche Wert von n auch eine gebrochene Zahl sein. Vorzugsweise beträgt der mittlere Wert von n 2 bis 3, insbesondere 2,1 bis 2,3. Die Oxyalkyleneinheiten können dabei blockweise oder statistisch angeordnet sein.

Der Index x gibt die Anzahl der Oxyalkyleneinheiten an. Er hat vorzugsweise einen mittleren Wert von 4 bis 50, insbesondere 6 bis 20.

Die Umesterungskomponente d) kann zusätzlich zur Umesterung eingesetzt werden, jedoch ist deren Einsatz fakultativ und nicht zwingend erforderlich. Die zusätzliche Verwendung der Umesterungskomponente d) hängt insbesondere von der Art des zu dispergierenden Feststoffs und/oder von der Art des organischen Mediums ab.

Die Komponente d) entspricht der allgemeinen Formel HO-$R^2$-N$R^3R^4$, wobei die Reste innerhalb der oben angegebenen Definitionen vorzugsweise folgende Bedeutungen haben:

$R^2$ ist ein zweibindiger Alkylenrest mit 2 oder 3 Kohlenstoffatomen;
$R^3$ und $R^4$ sind Alkylreste mit 1 oder 2 Kohlenstoffatomen.

Als Komponente d) sind die Verbindungen HO-$(CH_2)_2$-N$(CH_3)_2$ und HO-$(CH_2)_2$-N$(C_2H_5)_2$ besonders bevorzugt.

Das molare Verhältnis der Komponenten a) + b) + c) zu d) beträgt 1 : 0 bis 1 : 0,5, wobei aber im allgemeinen ein Verhältnis von 1 : 0 bis 1 : 0,2 bevorzugt ist.

Die Umsetzung wird mit solchen Mengen an Komponenten a) bis d) durchgeführt, daß ein Umesterungsgrad von 25 bis 70 % erreicht wird. Bevorzugt ist ein Umesterungsgrad von etwa 40 bis 60 %.

Die Umesterung verläuft in aus den obengenannten Patent- und Offenlegungsschriften an sich bekannter Weise bei Temperaturen von etwa 70 bis 140 °C in Gegenwart eines Umesterungskatalysators und gegebenenfalls in Gegenwart eines Lösungsmittels.

Das erfindungsgemäße Dispergiermittel kann aus dem Gemisch der Komponenten I) bis IV) nach allen Methoden des Standes der Technik hergestellt werden, beispielsweise durch Schmelzemischen; es kann aber auch als "dry blend" vorliegen.

Der Polyacrylsäureester ist im erfindungsgemäßen Dispergiermittel vorzugsweise zu 3 bis 30 Gew.-% und insbesondere zu 5 bis 15 Gew.-% enthalten.

Dieses Dispergiermittel eignet sich sehr gut für die Dispergierung von Pigmenten. Gegenüber der Verwendung der einzelnen Komponenten wird eine synergistische Wirkung erhalten.

Geeignete Pigmente anorganischer oder organischer Natur können sowohl dem Pigment Handbook, Vol. 1 - 3, John Wiley & Sons, New York 1988 als auch Ullmann's Encyclopedia of Industrial Chemistry, 5th edition, vol. A20, pp 213 ff (Phthalocyanines) und 371 ff (Pigments, Organic) entnommen werden. Beispielhaft seien folgende Substanzen angeführt: Ruß, Titandioxid, Zinkoxid, Azo-, Anthrachinon-, Perinon-, Dioxazin-, Indanthron-, Chinacridon-, Isoindolinon-, Perylen-, Phthalocyanin- und Thioindigopigmente.

Aus dem Dispergiermittel und den Pigmenten können Pigmentpräparationen innerhalb eines weiten Konzentrationsbereichs hergestellt werden. Hierbei kann es vorteilhaft sein, zusätzlich noch ein Polyolefin zuzugeben. Im allgemeinen enthalten derartige Pigmentpräparationen 10 bis 70 Gew.-% Pigment, 2 bis 60 Gew.-% Dispergiermittel und 0 bis 70 Gew.-% eines zusätzlichen Polyolefins. In einer bevorzugten Ausführungsform werden 10 bis 50 Gew.-% Pigment, 5 bis 40 Gew.-% Dispergiermittel und 10 bis 50 Gew.-% eines zusätzlichen Polyolefins eingesetzt.

Die Herstellung der Pigmentpräparation kann hierbei im festen Zustand durch Mischen als "dry blend" oder durch Schmelzemischen in einem Extruder bzw. Kneter erfolgen.

Derart hergestellte Pigmentpräparationen werden als Masterbatches für die Einfärbung von Polyolefinformmassen verwendet.

In den erfindungsgemäßen Pigmentpräparationen ist das Pigment auch bei hohen Pigmentkonzentrationen sehr fein dispergiert. In gleichlaufenden Doppelschneckenextrudern werden Dispergiergrade erreicht, die Teilchengrößen über 10 μm ausschließen. Darüber hinaus werden bei der Herstellung der Pigmentpräparationen unter Verwendung des erfindungsgemäßen Dispergiermittels höhere Produktionsdurchsätze erreicht.

Die erfindungsgemäßen Pigmentpräparationen eignen sich insbesondere zur Herstellung von eingefärbten Polyolefinfasern. Die feine Dispergierung des Pigments ist jedoch auch bei der Einfärbung von Spritzgußformmassen oder Extrudaten von Vorteil, da hierdurch eine höhere Farbausbeute am Fertigprodukt erzielt wird.

Im folgenden wird die Erfindung beispielhaft erläutert. Mit Buchstaben gekennzeichnete Versuche sind nicht erfindungsgemäß.

Herstellung der Dispergiermittel

Vergleichsbeispiel A:

Es wurde ein Polyolefinwachs (PP-Wachs) mit einer Dichte von ca. 0,88 g/cm$^3$, einem Erweichungspunkt von ca. 160 °C und einer Viskosität bei 170 °C von 1 500 mPa·s ohne weitere Zusätze verwendet.

Vergleichsbeispiel B:

Es wurde eine Schmelzemischung aus folgenden Komponenten hergestellt:

79 Gew.-% eines weitgehend amorphen Poly-$\alpha$-Olefins aus 66 Gew.-% Propen und 34 Gew.-% Buten-1 mit einer Viskosität von 3 000 mPa·s bei 190 °C und
21 Gew.-% eines isotaktischen Polypropylens (MFR 230/2,16 von 37,5 g/10 min).

Vergleichsbeispiel C:

Schmelzemischung aus 50 Gew.-% eines weitgehend amorphen Poly-$\alpha$-Olefins (wie im Vergleichsbeispiel B) und 50 Gew.-% eines Polyolefinwachses (PE-Wachs) mit der Dichte 0,92 g/cm$^3$ bei 25 °C und einem Tropfpunkt von ca. 110 °C.

Vergleichsbeispiel D:

Es wurde ein Polyacrylsäureester folgender Zusammensetzung ohne weitere Zusätze verwendet: Acrylatcopolymer ($M_n$ = 5 600, $M_w/M_n$ = 1,9), das ausgehend von einem Polymethylacrylat ($M_n$ = 3 000) durch Umesterung von 30 % aller monomeren Einheiten mit Stearylalkohol entsprechend DE-PS 42 36 337 hergestellt wurde.

Beispiel 1:

Es wurde eine Schmelzemischung aus folgenden Komponenten hergestellt:

75 Gew.-% eines weitgehend amorphen Poly-$\alpha$-Olefins (wie im Vergleichsbeispiel B),
20 Gew.-% eines isotaktischen Polypropylens (MFR 230/2,16 von 37,5 g/10 min) und
5 Gew.-% des Polyacrylsäureesters gemäß Vergleichsbeispiel D.

Beispiel 2:

Es wurde eine Schmelzemischung aus folgenden Komponenten hergestellt:

47,5 Gew.-% eines weitgehend amorphen Poly-$\alpha$-Olefins (wie im Vergleichsbeispiel B),
47,5 Gew.-% eines Polyolefinwachses (wie im Vergleichsbeispiel C) und
5 Gew.-% des Polyacrylsäureesters gemäß Vergleichsbeispiel D.

Beispiel 3:

Es wurde eine Schmelzemischung aus folgenden Komponenten hergestellt:

45 Gew.-% eines weitgehend amorphen Poly-$\alpha$-Olefins (wie im Vergleichsbeispiel B),
45 Gew.-% eines Polyolefinwachses (wie im Vergleichsbeispiel C) und
10 Gew.-% des Polyacrylsäureesters gemäß Vergleichsbeispiel D.

Beispiel 4:

Es wurde eine Schmelzemischung aus folgenden Komponenten hergestellt:

90 Gew.-% eines Polyolefinwachses (wie im Vergleichsbeispiel A) und
10 Gew.-% des Polyacrylsäureesters gemäß Vergleichsbeispiel D.

Herstellung der Pigmentpräparationen

Pigment, Dispergiermittel und Polyolefin werden 10 Minuten bei 900 rpm im Henschelmischer gemischt und anschließend auf einem Doppelschneckenextruder zu Granulat verarbeitet. Die Ergebnisse sind weiter unten dargestellt.

Bestimmung der Dispergierwirkung anhand des Druckfiltertests

Eine der wichtigsten Prüfmethoden zur Beurteilung der Dispergierqualität von Pigmenten in Farbmasterbatches ist der Druckfiltertest.
Bei diesem Verfahren wird eine Vormischung aus Masterbatch und (Polyolefin-)Naturmaterial, die insgesamt einen Pigmentanteil von 10 Gew.-% hat, in einem Extruder aufgeschmolzen und mittels einer Zahnradpumpe über ein definiertes Filterpaket extrudiert. Ende der Messung ist dann, wenn entweder ein Druck von 250 bar erreicht ist oder wenn 60 Minuten vergangen sind.

Maßstab für die Masterbatch-Qualität ist der sogenannte Druckfilterwert (DF), der sich nach folgender Formel errechnet:

$$DF = \frac{(P_{max} - P_o) \times F \times 100}{t \times K \times G} \ (bar \times cm^2/g)$$

Darin bedeuten:

$P_{max}$ = Enddruck (bar)
$P_o$ = Druck bei Betrieb nur mit Naturmaterial (bar)
F = Filterfläche ($cm^2$)
t = Meßzeit (min)
K = Konzentration (%)
G = Durchsatz (g/min)

Der Druckfilterwert ist also ein Maß dafür, wie schnell das Filterpaket durch Pigmentagglomerate verstopft wird. Niedrige DF-Werte stehen für eine gute Dispergierung der Pigmente.

Beispiele 5 bis 7 sowie Vergleichsbeispiele E bis I:

Wie oben beschrieben, wurde eine Pigmentpräparation aus folgenden Komponenten hergestellt:

18 Gew.-% Phthalocyaninblau (Heliogenblau K 7090, BASF, Cu-Phthalocyanin-β), 2 Gew.-% Phthalocyaningrün,
3 Gew.-% $TiO_2$,
2 Gew.-% Ruß,

Dispergiermittel der Art und Menge, wie in der Tabelle 1 angegeben,
Rest: Polypropylen (MFR 230/2,16 von 20 g/10 min)

Tabelle 1

| Druckfiltertest | | | |
|---|---|---|---|
| Beispiel bzw. Vergleichsbeispiel | Dispergiermittel aus Beispiel bzw. Vergleichsbeispiel Nr. | Menge an Dispergiermittel [Gew.-%] | Druckfilterwert |
| 5 | 1 | 10 | 3,7 |
| 6 | 2 | 10 | 1,7 |
| 7 | 4 | 10 | 5,3 |
| E | A | 10 | 6,7 |
| F | B | 10 | 6,1 |
| G | C | 10 | 7,5 |
| H | D | 2 | 9,3 |
| I | D | 4 | 6,7 |

Die Vergleichsbeispiele H und I (entsprechend DE-PS 42 36 337) zeigen, daß sogar bei weit überproportionalen Zugabemengen an uncompoundiertem Polyacrylsäureester nur unbefriedigende Ergebnisse erhalten werden.

Beispiel 8 sowie Vergleichsbeispiel J:

Wie oben beschrieben, wurde eine Pigmentpräparation aus folgenden Komponenten hergestellt:

50 Gew.-% Polypropylen (MFR 230/2,16 von 20 g/10 min)
30 Gew.-% Irgalite Rot 2 BP-Pigment [Azorot 2B Toner(Ca) Pigment Red 48 2]
20 Gew.-% Dispergiermittel der Art, wie in der Tabelle 2 angegeben.

Tabelle 2

| Druckfiltertest | | |
|---|---|---|
| Beispiel bzw. Vergleichsbeispiel | Dispergiermittel aus Beispiel bzw. Vergleichsbeispiel Nr. | Druckfilterwert |
| 8 | 3 | 5,7 |
| J | A | 14 |

Beispiel 9 sowie Vergleichsbeispiel K:

Wie oben beschrieben, wurde eine Pigmentpräparation aus folgenden Komponenten hergestellt:

50 Gew.-% Polypropylen (MFR 230/2,16 von 20 g/10 min)
30 Gew.-% Irgalite Rubin L4BD-Pigment [Azorot 4B Toner(Ca) Pigment Red 57 : 1]
20 Gew.-Teile Dispergiermittel der Art, wie in der Tabelle 3 wiedergegeben.

Tabelle 3

| Druckfiltertest | | |
|---|---|---|
| Beispiel bzw. Vergleichsbeispiel | Dispergiermittel aus Beispiel bzw. Vergleichsbeispiel Nr. | Druckfilterwert |
| 9 | 3 | 2,7 |
| K | A | 6,4 |

Beispiel 10 sowie Vergleichsbeispiel L:

Siehe Tabelle 4.

Tabelle 4

| Zusammensetzungen und Druckfiltertest | | |
|---|---|---|
| | Beispiel 10 [Gew.-%] | Vergleichsbeispiel L [Gew.-%] |
| Polypropylen (MFR 230/2,16 von 20 g/10 min) | 40 | 30 |
| Phthalocyaninblau | 40 | 40 |
| Dispergiermittel aus Beispiel 3 | 20 | - |
| Dispergiermittel aus Vergleichsbeispiel A | - | 30 |
| Druckfilterwert | 0,4 | 2,1 |

**Patentansprüche**

1. Dispergiermittel für Pigmentpräparationen, das im wesentlichen aus folgenden Komponenten besteht:

I) 0 bis 90 Gew.-% eines weitgehend amorphen Poly-α-Olefins;
II) 0 bis 90 Gew.-% Polyolefinwachs;
III) 0 bis 30 Gew.-% kristallines Polyolefin sowie
IV) 1 bis 50 Gew.-% eines Polyacrylsäureesters, der hergestellt wird durch Umesterung eines durch radikalische Polymerisation erhaltenen Polyacrylsäurealkylesters, dessen Alkylrest 1 bis 3 Kohlenstoffatome aufweist, mit

a) gesättigten aliphatischen Alkoholen mit 4 bis 30 Kohlenstoffatomen und/oder
b) ungesättigten aliphatischen Alkoholen mit 8 bis 30 Kohlenstoffatomen und gegebenenfalls zusätzlich

EP 0 751 171 B1

c) Polyoxyalkylenmonoolen der allgemeinen Formel

$$R^1O\text{-}(C_nH_{2n}O\text{-})_xH,$$

wobei $R^1$ der Kohlenwasserstoffrest eines Startalkohols $R^1OH$ oder einer Sulfonsäure mit maximal 30 Kohlenstoffatomen ist,

n 2, 3 oder 4 ist und in der durchschnittlichen Polyoxyalkylengruppe einen mittleren Wert von 2 bis 3 hat und

x ein Wert von 1 bis 70 ist und in dem durchschnittlichen Polyoxyalkylenmonool einen mittleren Wert von 4 bis 50 hat,

d) und gegebenenfalls Dialkylaminoalkanolen der allgemeinen Formel HO-$R^2$-$NR^3R^4$, wobei $R^2$ ein zweiwertiger Alkylenrest mit 2 bis 4 Kohlenstoffatomen ist und $R^3$ und $R^4$ gleich oder verschieden sind und Alkylreste mit 1 bis 4 Kohlenstoffatomen bedeuten,
wobei das molare Verhältnis der Alkoholkomponenten a) + b) + c) zu den Dialkylaminoalkoholen d) 1 : 0 bis 1 : 0,5 beträgt, und die Komponenten a) bis d) in solchen Mengen verwendet werden, daß 25 bis 70 % der Estergruppen umgeestert werden.

2. Dispergiermittel gemäß Anspruch 1,
dadurch gekennzeichnet,
daß das weitgehend amorphe Poly-$\alpha$-Olefin folgende Zusammensetzung besitzt:

3 bis 75 Gew.-% $\alpha$-Olefine mit 4 bis 6 Kohlenstoffatomen,
25 bis 95 Gew.-% Propen sowie
0 bis 20 Gew.-% Ethen.

3. Dispergiermittel gemäß einem der Ansprüche 1 bis 2,
dadurch gekennzeichnet,
daß das weitgehend amorphe Poly-$\alpha$-Olefin ein Propen/Buten-1/Ethen-Terpolymer, ein Propen/Buten-1-Copolymer, ein Propen-Ethen-Copolymer, ein Buten-1/Ethen-Copolymer oder APP ist.

4. Dispergiermittel gemäß einem der Ansprüche 1 bis 3,
dadurch gekennzeichnet,
daß das weitgehend amorphe Poly-$\alpha$-Olefin eine Viskosität von 1 000 bis 100 000 mPa·s bei 190 °C besitzt.

5. Dispergiermittel gemäß einem der Ansprüche 1 bis 4,
dadurch gekennzeichnet,
daß das Polyolefinwachs in Mengen von 5 bis 90 Gew.-% enthalten ist.

6. Dispergiermittel gemäß einem der Ansprüche 1 bis 5,
dadurch gekennzeichnet,
daß das Polyolefinwachs ein Molekulargewichtsmittel $\overline{M}_W$ im Bereich von 700 bis 30 000 und vorzugsweise im Bereich von 900 bis 9 000 besitzt.

7. Dispergiermittel gemäß einem der Ansprüche 1 bis 6,
dadurch gekennzeichnet,
daß der Polyacrylsäureester ein Molekulargewichtsmittel $\overline{M}_W$ von 1 000 bis 20 000 besitzt.

8. Dispergiermittel gemäß einem der Ansprüche 1 bis 7,
dadurch gekennzeichnet,
daß der Polyacrylsäureester zu 3 bis 30 Gew.-%, insbesondere zu 5 bis 15 Gew.-% enthalten ist.

9. Pigmentpräparation, die folgende Komponenten enthält:

10 bis 70 Gew.-% Pigment,

2 bis 60 Gew.-% Dispergiermittel gemäß einem der Ansprüche 1 bis 8 und
0 bis 70 Gew.-% eines zusätzlichen Polyolefins.

**10.** Pigmentpräparation, die folgende Komponenten enthält:

10 bis 50 Gew.-% Pigment,
5 bis 40 Gew.-% Dispergiermittel gemäß einem der Ansprüche 1 bis 8 und
10 bis 50 Gew.-% eines zusätzlichen Polyolefins.

**11.** Polyolefinformmasse oder Polyolefinfertigprodukt, die mit einer Pigmentpräparation gemäß Anspruch 9 eingefärbt sind.

**Claims**

**1.** A dispersant for pigment preparations, which is essentially made up of the following components:

I) from 0 to 90 % by weight of a substantially amorphous poly-$\alpha$-olefin;
II) from 0 to 90 % by weight of polyolefin wax;
III) from 0 to 30 % by weight of crystalline polyolefin, and
IV) from 1 to 50 % by weight of a polyacrylic acid ester which is prepared by transesterification of a polyalkyl acrylate, which has been obtained by free-radical polymerization and whose alkyl radical contains 1 to 3 carbon atoms, with

a) saturated aliphatic alcohols having 4 to 30 carbon atoms and/or
b) unsaturated aliphatic alcohols having 8 to 30 carbon atoms and, additionally if desired,
c) polyoxyalkylenemonools of the general formula

$$R^1O\text{-}(C_nH_{2n}O\text{-})_xH,$$

where $R^1$ is the hydrocarbon radical of a starting alcohol $R^1OH$ or of a sulphonic acid with a maximum of 30 carbon atoms,

n is 2, 3 or 4 and in the average polyoxyalkylene group has a mean value of from 2 to 3, and

x is from 1 to 70 and in the average polyoxyalkylene monool has a mean value of from 4 to 50,

d) and, if desired, dialkylaminoalkanols of the general formula $HO\text{-}R^2\text{-}NR^3R^4$, in which $R^2$ is a divalent alkylene radical having 2 to 4 carbon atoms and $R^3$ and $R^4$ are identical or different and are alkyl radicals having 1 to 4 carbon atoms,
the molar ratio of the alcohol components a) + b) + c) to the dialkylaminoalcohols d) being from 1 : 0 to 1 : 0.5, and components a) to d) being used in amounts such that from 25 to 70 % of the ester groups are transesterified.

**2.** A dispersant according to claim 1, characterized in that the substantially amorphous poly-$\alpha$-olefin has the following composition:

from 3 to 75 % by weight of $\alpha$-olefins having from 4 to 6 carbon atoms,
from 25 to 95 % by weight of propene, and
from 0 to 20 % by weight of ethene.

**3.** A dispersant according to one of claims 1 and 2,
characterized in that the substantially amorphous poly-$\alpha$-olefin is a propene/1-butene/ethene terpolymer, a propene/1-butene copolymer, a propene/ethene copolymer, a 1-butene/ethene copolymer or APP.

**4.** A dispersant according to any one of claims 1 to 3,
characterized in that the substantially amorphous poly-$\alpha$-olefin has a viscosity of from 1000 to 100,000 mPa·s at 190°C.

5. A dispersant according to any one of claims 1 to 4,
   characterized in that the polyolefin wax is present in amounts of from 5 to 90 % by weight.

6. A dispersant according to any one of claims 1 to 5,
   characterized in that the polyolefin wax has a weight-average molecular weight $\overline{M}_W$ in the range from 700 to 30,000 and preferably in the range from 900 to 9000.

7. A dispersant according to any one of claims 1 to 6,
   characterized in that the polyacrylic acid ester has a weight-average molecular weight $\overline{M}_W$ of from 1000 to 20,000.

8. A dispersant according to any one of claims 1 to 7,
   characterized in that the content of the polyacrylic acid ester is from 3 to 30 % by weight, in particular from 5 to 15 % by weight.

9. A pigment preparation comprising the following components:

   from 10 to 70% by weight of pigment,
   from 2 to 60% by weight of dispersant according
   to any one of claims 1 to 8, and
   from 0 to 70 % by weight of an additional polyolefin.

10. A pigment preparation comprising the following components:

   from 10 to 50 % by weight of pigment,
   from 5 to 40 % by weight of dispersant according to any one of claims 1 to 8, and
   from 10 to 50 % by weight of an additional polyolefin.

11. A polyolefin moulding composition or polyolefin finished product, coloured with a pigment preparation according to claim 9.


**Revendications**

1. Agent de dispersion pour préparation de pigments qui consiste essentiellement en les composants suivants :

   I) 0 à 90 % en poids d'une poly-α-oléfine largement amorphe.
   II) 0 à 90 % en poids de cire de polyoléfine.
   III) 0 à 30 % en poids de polyoléfine cristalline ainsi que,
   IV) 1 à 50 % en poids d'un ester d'acide polyacrylique, préparé par transestérification d'un ester d'alkyle d'acide polyacrylique obtenu par polymérisation par voie radicalaire, dont le radical alkyle possède de 1 à 3 atomes de carbone, avec

   a) des alcools aliphatiques saturés ayant de 4 à 30 atomes de carbone et/ou,
   b) des alcools aliphatiques non saturés ayant de 8 à 30 atomes de carbone et le cas échéant en supplément,
   c) des polyoxyalkylène mono-ols de formule générale :

   $$R^1O\text{-}(C_nH_{2n}O\text{-})_xH,$$

   dans laquelle :

   $R^1$ est le reste hydrocarbure d'un alcool de départ
   $R^1OH$ ou d'un acide sulfonique ayant au maximum 30 atomes de carbone,
   n est 2, 3 ou 4 et a dans le groupe polyoxyalkylène moyen une valeur moyenne de 2 à 3 et,
   x est une valeur de 1 à 70 et dans le polyoxyalkylène mono-ol moyen a une valeur moyenne de 4 à 50,

d) et le cas échéant des dialkylaminoalcanols de formule générale HO-R$^2$-NR$^3$R$^4$, dans laquelle R$^2$ est un reste alkylène difonctionnel ayant de 2 à 4 atomes de carbone, et R$^3$ et R$^4$ sont identiques ou différents et signifient des restes alkyle ayant de 1 à 4 atomes de carbone, le rapport molaire des composants alcooliques a) + b) + c) rapporté aux dialkylamino-alcools d) s'élèvant de 1:0 à 1:0,5, et les composants a) à d) étant utilisés en quantités telles que de 25 à 70 % des groupes ester sont transestérifiés.

2. Agent de dispersion selon la revendication 1,
caractérisé en ce que
la poly-α-oléfine largement amorphe possède la composition qui suit :

- 3 à 75 % en poids d'une α-oléfine ayant de 4 à 6 atomes de carbone,
- 25 à 95 % en poids de propène ainsi que
- 0 à 20 % en poids d'éthène.

3. Agent de dispersion selon la revendication 1 ou 2,
caractérisé en ce que
la poly-α-oléfine largement amorphe est un terpolymère propène/butène-1/éthène, un copolymère propène/butène-1, un copolymère propène-éthène, un copolymère butène-1/éthène ou APP.

4. Agent de dispersion selon l'une quelconque des revendications 1 à 3,
caractérisé en ce que
la poly-α-oléfine largement amorphe possède une viscosité variant de 1000 à 100.000 mPa.s à 190°C.

5. Agent de dispersion selon l'une quelconque des revendications 1 à 4,
caractérisé en ce que
la cire de polyoléfine est contenue en quantités allant de 5 à 90 % en poids.

6. Agent de dispersion selon l'une quelconque des revendications 1 à 5,
caractérisé en ce que
la cire de polyoléfine possède un poids moléculaire moyen $\overline{M}_W$ dans la zone de 700 à 30.000 et de préférence dans la zone de 900 à 9000.

7. Agent de dispersion selon l'une quelconque des revendications 1 à 6,
caractérisé en ce que
l'ester d'acide polyacrylique possède un poids moléculaire moyen $M_W$ de 1000 à 20.000.

8. Agent de dispersion selon l'une quelconque des revendications 1 à 7,
caractérisé en ce que
l'ester d'acide polyacrylique est contenu pour 3 à 30 % en poids et en particulier de 5 à 15 % en poids.

9. Préparation de pigment qui renferme les composants suivants :

- de 10 à 70 % en poids de pigment,
- de 2 à 60 % en poids d'agent dispersant conformément à l'une quelconque des revendications 1 à 8, et
- de 0 à 70 % en poids d'une polyoléfine supplémentaire.

10. Préparation de pigment qui renferme les composants suivants :

- de 10 à 50 % en poids de pigment,
- de 5 à 40 % en poids d'agent dispersant selon l'une quelconque des revendications 1 à 8, et
- de 10 à 50 % en poids d'une polyoléfine supplémentaire.

11. Masse moulée en polyoléfine ou produit terminé en polyoléfine qui est mis en couleurs avec une préparation pigmentaire selon la revendication 9.